(19) Europäisches Patentamt
European Patent Office
Office européen des brevets

(11) EP 4 455 218 A1

(12) EUROPEAN PATENT APPLICATION
published in accordance with Art. 153(4) EPC

(43) Date of publication:
30.10.2024 Bulletin 2024/44

(21) Application number: 22911162.0

(22) Date of filing: 19.12.2022

(51) International Patent Classification (IPC):
C08L 77/06 (2006.01) C08G 69/26 (2006.01)
C08K 3/013 (2018.01) C08K 5/5313 (2006.01)

(52) Cooperative Patent Classification (CPC):
C08G 69/26; C08K 3/013; C08K 5/5313;
C08L 77/06

(86) International application number:
PCT/JP2022/046620

(87) International publication number:
WO 2023/120460 (29.06.2023 Gazette 2023/26)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 20.12.2021 JP 2021206197

(71) Applicant: Kuraray Co., Ltd.
Kurashiki-shi, Okayama 710-0801 (JP)

(72) Inventors:
- SUGAI, Naoto
Tsukuba-shi, Ibaraki 305-0841 (JP)
- NANYA, Atsushi
Tsukuba-shi, Ibaraki 305-0841 (JP)

(74) Representative: Müller-Boré & Partner Patentanwälte PartG mbB
Friedenheimer Brücke 21
80639 München (DE)

# (54) POLYAMIDE COMPOSITION

(57) A polyamide composition comprising a polyamide (A) and a halogen-free flame-retardant (B), in which the polyamide (A) comprises a diamine unit (X) and a dicarboxylic acid unit (Y), the diamine unit (X) comprises 0.1 mol% or more and less than 36 mol% of a diamine unit (X1), the diamine unit (X1) is a constituent unit derived from an aliphatic diamine, and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

EP 4 455 218 A1

## Description

Technical Field

The present invention relates to a polyamide composition including: a polyamide containing a specific diamine unit having a branched chain, and a dicarboxylic acid unit; and a halogen-free flame-retardant.

Background Art

Crystalline polyamides represented by nylon 6 and nylon 66 are widely used for industrial parts because of their excellent heat resistance, mechanical properties, and moldability. For example, in automotive applications, resinification of metal parts has been promoted from the viewpoint of weight reduction and design flexibility, and crystalline polyamides excellent in the above properties are often used. However, performance required for plastic materials has become severe from the viewpoint of improving fuel efficiency and complying with environmental regulations, and materials with more excellent performance in terms of heat resistance and hydrolysis resistance are required.

In addition, from the viewpoint of reducing the production cost of parts, there is a demand for a material which is solidified in a short time when the material is cooled from a molten state, that is, a material with a high crystallization rate. When the crystallization rate is high, the time required for molding one part can be shortened, and the production efficiency can be improved.

For example, PTL 1 indicates that a polyamide simultaneously satisfying flowability, toughness, and stiffness can be obtained when a diamine unit having a branched structure is contained, in a proportion of at least 50 mol%, in the main chain of the polyamide. PTL 2 discloses a method for producing a polyamide composition containing a diamine unit having a methyl or ethyl branch.

Citation List

Patent Literature

PTL 1: JP2011-080055A

PLT 2: JP2017-517594A

Summary of Invention

Technical Problem

In PTLs 1 and 2, a methyl group, an ethyl group, and an n-propyl group are described as substituents branched from a main chain of a diamine forming a polyamide. However, only a diamine having a methyl group as a branched chain is shown as specific examples. None of the documents specifically discloses containing, as a branched chain, a branched diamine that has a substituent having carbon atoms more than carbon atoms in a methyl group, and an effect provided by having a branched chain having 2 or more carbon atoms is not clear.

As described above, while a material with a high crystallization rate is required, further improvement in physical properties such as heat resistance is also required.

Therefore, the present invention provides a polyamide composition excellent in heat resistance, flame resistance, and moldability and also excellent in hydrolysis resistance.

Solution to Problem

As a result of intensive studies to solve the above problems, the present inventor has conceived of the present invention described below and found that the problems can be solved.

In other words, the present invention is as follows.

[1] A polyamide composition including a polyamide (A) and a halogen-free flame-retardant (B), in which

the polyamide (A) comprises a diamine unit (X) and a dicarboxylic acid unit (Y),

the diamine unit (X) comprises 0.1 mol% or more and less than 36 mol% of a diamine unit (X1),
the diamine unit (X1) is a constituent unit derived from an aliphatic diamine, and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

[2] The polyamide composition according to [1] above, in which the diamine unit (X1) is a constituent unit derived from an aliphatic diamine having 9 carbon atoms.
[3] The polyamide composition according to [1] or [2] above, in which the diamine unit (X1) is a constituent unit derived from at least one diamine selected from the group consisting of 2-ethyl-1,7-heptanediamine and 2-propyl-1,6-hexanediamine.
[4] The polyamide composition according to any of [1] to [3] above, in which the diamine unit (X) comprises 1 to 20 mol% of the diamine unit (X1).
[5] The polyamide composition according to any of [1] to [4] above, in which the diamine unit (X) further comprises a diamine unit (X2), the diamine unit (X2) is a diamine unit other than the diamine unit (X1), and the diamine unit (X2) is a constituent unit derived from at least one diamine selected from the group consisting of a linear aliphatic diamine, a branched aliphatic diamine other than the aliphatic diamine constituting the diamine unit (X1), an alicyclic diamine, and an aromatic diamine.
[6] The polyamide composition according to [5] above, in which the diamine unit (X2) is a constituent unit derived from at least one diamine selected from the group consisting of a linear aliphatic diamine and a branched aliphatic diamine having a methyl group as a branched chain.
[7] The polyamide composition according to [5] or [6] above, in which the diamine unit (X2) is a constituent unit derived from a diamine having 6 to 10 carbon atoms.
[8] The polyamide composition according to any of [5] to [7] above, in which the diamine unit (X2) is a constituent unit derived from at least one diamine selected from the group consisting of 1,6-hexanediamine, 1,9-nonanediamine, 1,10-decanediamine, 2-methyl-1,5-pentanediamine, and 2-methyl-1,8-octanediamine.
[9] The polyamide composition according to any of [1] to [8] above, in which the dicarboxylic acid unit (Y) comprises a constituent unit derived from at least one dicarboxylic acid selected from the group consisting of an aliphatic dicarboxylic acid, an aromatic dicarboxylic acid, and an alicyclic dicarboxylic acid.
[10] The polyamide composition according to any of [1] to [9] above, in which the dicarboxylic acid unit (Y) comprises a constituent unit derived from at least one dicarboxylic acid selected from the group consisting of terephthalic acid, cyclohexane dicarboxylic acid, and naphthalene dicarboxylic acid.
[11] The polyamide composition according to any of [1] to [10] above, in which the halogen-free flame-retardant (B) is at least one selected from the group consisting of a monophosphinate represented by General Formula (1) below and a diphosphinate represented by General Formula (2) below.

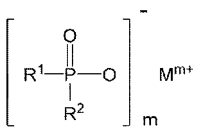

(1)

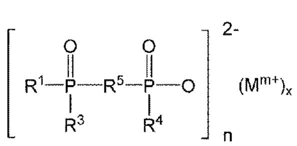

(2)

[In General Formula (1) and General Formula (2) above, $R^1$, $R^2$, $R^3$, and $R^4$ each independently represent an alkyl group having 1 to 6 carbon atoms, an aryl group having 6 to 12 carbon atoms, or an arylalkyl group having 7 to 20 carbon atoms. $R^5$ represents an alkylene group having 1 to 10 carbon atoms, an arylene group having 6 to 10 carbon atoms, an alkylarylene group having 7 to 20 carbon atoms, or an arylalkylene group having 7 to 20 carbon atoms. M represents calcium (ion), magnesium (ion), aluminum (ion), or zinc (ion), m is 2 or 3, n is 1 or 3, and x is 1 or 2.]
[12] The polyamide composition according to any of [1] to [11] above, further comprising a filler (C).
[13] The polyamide composition according to [12] above, comprising 0.1 parts by mass or more and 200 pars by mass or less of the filler (C) based on 100 parts by mass of the polyamide (A).
[14] A molded article composed of the polyamide composition according to any of [1] to [13] above.
[15] The molded article according to [14] above, which is an electric part or an electronic part.

[16] The molded article according to [14] or [15] above, which is a surface mounting part.

## Advantageous Effects of Invention

According to the present invention, a polyamide composition excellent in heat resistance, flame resistance, and moldability and also excellent in hydrolysis resistance can be provided.

## Description of Embodiments

Hereinafter, the present invention will be described on the basis of an example of an embodiment (hereinafter, sometimes referred to as "the present embodiment") thereof. However, embodiments described below are examples for embodying the technical idea of the present invention, and the present invention is not limited to the following description.

In addition, in the description herein, preferred modes of the embodiments are shown, but a combination of two or more of individual preferred modes is also a preferred mode. Regarding the matters indicated by numerical ranges, in a case where there are several numerical ranges, it is possible to selectively combine a lower limit value and an upper limit value thereof to obtain a preferred mode.

In the description herein, when there is a description pertaining to a numerical range of "XX to YY", the description means "XX or more and YY or less".

In the description herein, "- unit" ("-" herein represents a monomer) means a "constituent unit derived from -". For example, a "dicarboxylic acid unit" means a "constituent unit derived from dicarboxylic acid", and a "diamine unit" means a "constituent unit derived from diamine".

### <Polyamide composition>

### [Polyamide (A)]

The polyamide (A) used in the present embodiment contains a diamine unit (X) and a dicarboxylic acid unit (Y).

The diamine unit (X) is characterized by comprising a specific amount of a diamine unit (X1) derived from an aliphatic diamine, and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

In general, when a component having a large excluded volume such as a branched chain is contained in a polymer skeleton, molecular chains are less likely to be regularly arranged, and thus the crystallization rate tends to be low. However, since a specific amount of a diamine component having, as a branched chain, an alkyl group having 2 or 3 carbon atoms, such as an ethyl group or a propyl group, is included in the present embodiment, the crystallization rate is made unexpectedly high.

In general, when a polyamide has a bulky substituent such as a branched chain, the polyamide is less likely to have a crystal structure, and the melting point thereof tends to decrease. However, even when the polyamide (A) in the present embodiment has, as a branched chain, a relatively bulky substituent having 2 or 3 carbon atoms, such as an ethyl group or a propyl group, decrease in melting point is small, and excellent heat resistance can be exhibited.

Further, glass transition temperature is a property which becomes higher as the molecular mobility of the amorphous portion of a substance becomes lower. Therefore, when a component having high molecular mobility such as a branched chain is contained, glass transition temperature generally tends to become lower. However, the polyamide (A) in the present embodiment surprisingly has little decrease in the glass transition temperature, and can exhibit excellent heat resistance.

As one reason why the above-described effects are provided, it is considered that the number of carbon atoms in the branched chain, the position of the branched chain, and the amount of the branched chain in the diamine unit (X) contained in the polyamide (A) may affect improvement of the crystallization rate while maintaining excellent heat resistance. However, the detailed reason is not clear.

#### (Diamine unit)

#### <Diamine unit (X1)>

The diamine unit (X) comprises a diamine unit (X1) which is a constituent unit derived from an aliphatic diamine having 6 to 10 carbon atoms, and an alkyl group having two or three carbon atoms bonded to a carbon atom at 2-position when a carbon atom to which any one of two amino groups is bonded is taken as 1-position.

Assuming a linear aliphatic chain in which the carbon atoms at both ends thereof are carbon atoms to which two amino groups respectively is bonded, the diamine unit (X1) is a constituent unit derived from the aliphatic diamine having a structure in which one of the hydrogen atoms on the carbon atom at 2-position adjacent to the carbon atom at 1-position to which any one of two amino groups is bonded is substituted with an alkyl group having 2 or 3 carbon atoms. Hereinbelow, the constituent unit derived from the aliphatic diamine having a structure in which one of the hydrogen atoms on the carbon atom at 2-position is substituted with an alkyl group having 2 or 3 carbon atoms is also referred to as the "branched aliphatic diamine unit".

The number of carbon atoms of the branched aliphatic diamine unit constituting the diamine unit (X1) is preferably 8 to 10 and more preferably 9. When the number of carbon atoms is within the above range, polymerization reaction between a dicarboxylic acid and a diamine proceeds well, and the physical properties of the polyamide composition are more easily improved.

In the branched aliphatic diamine unit constituting the diamine unit (X1), the alkyl group having 2 or 3 carbon atoms is preferably at least one selected from the group consisting of an ethyl group, a propyl group, and an isopropyl group, and is more preferably at least one selected from the group consisting of an ethyl group and a propyl group. When the number of carbon atoms in the alkyl group is 1 or is 4 or more, there is a possibility that the crystallization rate is not improved and heat resistance is deteriorated.

The branched aliphatic diamine used to form the diamine unit (X1) may have a branched chain (referred to as an "additional branched chain") such as a methyl group on a carbon atom other than the carbon atom at 2-position as long as the effects of the present invention are not impaired. The number of additional branched chains is preferably one or less, and it is more preferable that the diamine unit (X1) contains no additional branched chain.

Examples of the diamine unit (X1) include constituent units derived from 2-ethyl-1,4-butanediamine, 2-ethyl-1,5-pentanediamine, 2-ethyl-1,6-hexanediamine, 2-ethyl-1,7-heptanediamine, 2-ethyl-1,8-octanediamine, 2-propyl-1,5-pentanediamine, 2-propyl-1,6-hexanediamine, 2-propyl-1,7-heptanediamine, and 2,4-diethyl-1,6-hexanediamine. One kind of these constituent units may be included alone or two or more kinds thereof may be included.

Among these, from the viewpoint that further excellent improvement in the crystallization rate can be expected and the viewpoint of making hydrolysis resistance of a molded article obtained excellent, it is preferable that the diamine unit (X1) be a constituent unit derived from at least one diamine selected from the group consisting of 2-ethyl-1,7-heptanediamine and 2-propyl-1,6-hexanediamine.

The diamine unit (X) includes the diamine unit (X1) in an amount of 0.1 mol% or more and less than 36 mol%. When the amount of the diamine unit (X1) is 0.1 mol% or more, it is possible to improve the crystallization rate. When the amount of the diamine unit (X1) is less than 36 mol%, a possibility of deterioration in heat resistance can be decreased.

From the viewpoint of obtaining a polyamide composition with more excellent balance between heat resistance and the crystallization rate, the diamine unit (X) includes the diamine unit (X1) in an amount of preferably 0.5 mol% or more, more preferably 1 mol% or more, still more preferably 3 mol% or more, and further preferably 5 mol% or more, and preferably 35 mol% or less, more preferably 30 mol% or less, still more preferably 25 mol% or less, further preferably 20 mol% or less, further preferably 18 mol% or less, further preferably 15 mol% or less, and further preferably 10 mol% or less.

In other words, the diamine unit (X) includes the diamine unit (X1) in an amount of preferably 0.5 to 35 mol%, more preferably 0.5 to 30 mol%, still more preferably 1 to 30 mol%, further preferably 3 to 25 mol%, and further preferably 5 to 20 mol%.

As one preferred embodiment, when the diamine unit (X1) includes a constituent unit derived from at least one diamine selected from the group consisting of 2-ethyl-1,7-heptanediamine and 2-propyl-1,6-hexanediamine, an example of the content of each constituent unit is as follows.

The content of the constituent unit derived from 2-ethyl-1,7-heptanediamine in the diamine unit (X) is preferably 0.5 mol% or more and more preferably 2 mol% or more, and preferably 20 mol% or less, more preferably 16 mol% or less, and still more preferably 10 mol% or less. In other words, the content of the constituent unit derived from 2-ethyl-1,7-heptanediamine in the diamine unit (X) is preferably 0.5 to 20 mol%.

The content of the constituent unit derived from 2-propyl-1,6-hexanediamine in the diamine unit (X) is preferably 0.1 mol% or more and more preferably 0.5 mol% or more, and preferably 5 mol% or less, more preferably 3 mol% or less, and still more preferably 2 mol% or less. In other words, the content of the constituent unit derived from 2-propyl-1,6-hexanediamine in the diamine unit (X) is preferably 0.1 to 5 mol%.

<Diamine unit (X2)>

The polyamide (A) contains, as the diamine unit (X), a diamine unit (hereinafter, also referred to as the "diamine unit (X2)" other than the diamine unit (X1).

The diamine unit (X2) is a constituent unit derived from a diamine having preferably 6 to 10 carbon atoms, more preferably 8 to 10 carbon atoms, and still more preferably 9 carbon atoms, from the viewpoint of allowing polymerization

reaction between a dicarboxylic acid and a diamine proceed well.

Examples of the diamine unit (X2) include a constituent unit derived from at least one diamine selected from the group consisting of a linear aliphatic diamine, a branched aliphatic diamine other than the aliphatic diamine constituting the diamine unit (X1), an alicyclic diamine, and an aromatic diamine.

Examples of the linear aliphatic diamine include ethylenediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, and 1,18-octadecanediamine.

Examples of the branched aliphatic diamine include 1, 2-propanediamine, 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2-butyl-2-ethyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-methyl-1,9-nonanediamine, and 5-methyl-1,9-nonanediamine.

Examples of the alicyclic diamine include cyclohexanediamine, methylcyclohexanediamine, norbornanedimethylamine, tricyclodecanedimethyldiamine, bis(4-amino-3-ethylcyclohexyl)methane, and bis(4-amino-3-ethyl-5-methylcyclohexyl)methane.

Examples of the aromatic diamine include p-phenylenediamine, m-phenylenediamine, p-xylylenediamine, m-xylylenediamine, 4,4'-diaminodiphenylmethane, 4,4'-diaminodiphenyl sulfone, 4,4'-diaminodiphenyl ether, and 4,4'-methylenebis(2,6-diethylaniline).

The constituent unit derived from a diamine may be only one kind, or may be two or more kinds.

Among the diamine unit (X2), a constituent unit derived from at least one diamine selected from the group consisting of a linear aliphatic diamine and a branched aliphatic diamine containing a methyl group as a branched chain is more preferable. From the viewpoint of easily exhibiting the effects of the present invention more remarkably, the diamine unit (X2) is more preferably a constituent unit derived from at least one diamine selected from the group consisting of 1,6-hexanediamine, 1,9-nonanediamine, 1,10-decanediamine, 2-methyl-1,5-pentanediamine, and 2-methyl-1,8-octanediamine.

(Dicarboxylic acid unit (Y))

As the dicarboxylic acid unit (Y), an arbitrary dicarboxylic acid unit may be included.

The dicarboxylic acid unit (Y) may include, for example, a constituent unit derived from at least one dicarboxylic acid selected from the group consisting of an aliphatic dicarboxylic acid, an aromatic dicarboxylic acid, and an alicyclic dicarboxylic acid.

Examples of the aliphatic dicarboxylic acid include oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid.

Examples of the aromatic dicarboxylic acid include terephthalic acid, isophthalic acid, diphenic acid, 4,4'-biphenyldicarboxylic acid, diphenylmethane-4,4'-dicarboxylic acid, diphenylsulfone-4,4'-dicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, 2,3-furandicarboxylic acid, 2,4-furandicarboxylic acid, 2,5-furandicarboxylic acid, and 3,4-furandicarboxylic acid.

Examples of the alicyclic dicarboxylic acid include 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid.

Only one kind of the constituent unit derived from a dicarboxylic acid may be included, or two or more kinds thereof may be included.

From the viewpoint of easily exhibiting the effects of the present invention more remarkably, the dicarboxylic acid unit (Y) preferably includes a constituent unit derived from at least one dicarboxylic acid selected from the group consisting of an aromatic dicarboxylic acid and an alicyclic dicarboxylic acid, and more preferably includes a constituent unit derived from at least one dicarboxylic acid selected from the group consisting of terephthalic acid, cyclohexanedicarboxylic acid, and naphthalenedicarboxylic acid.

The total content of constituent units derived from an aliphatic dicarboxylic acid, an aromatic dicarboxylic acid,

and an alicyclic dicarboxylic acid in the dicarboxylic acid unit (Y) is preferably 80 mol% or more, more preferably 90 mol%, and still more preferably 95 mol% or more, and may be 100 mol%, from the viewpoint of easily exhibiting the effects of the present invention more remarkably. In other words, the total content of constituent units derived from an aliphatic dicarboxylic acid, an aromatic dicarboxylic acid, and an alicyclic dicarboxylic acid in the dicarboxylic acid unit (Y) is preferably 80 to 100 mol%.

From a similar viewpoint, the total content of constituent units derived from terephthalic acid, cyclohexanedicarboxylic acid, and naphthalenedicarboxylic acid in the dicarboxylic acid unit (Y) is preferably 80 mol% or more, more preferably 90 mol%, and still more preferably 95 mol% or more, and may be 100 mol%. In other words, the total content of constituent units derived from terephthalic acid, cyclohexanedicarboxylic acid, and naphthalenedicarboxylic acid in the dicarboxylic acid unit (Y) is preferably 80 to 100 mol%.

The molar ratio [diamine unit (X)/dicarboxylic acid unit (Y)] between the diamine unit (X) and the dicarboxylic acid unit (Y) in the polyamide (A) is preferably 45/55 to 55/45. When the molar ratio between the diamine unit (X) and the dicarboxylic acid unit (Y) is within the above range, polymerization reaction proceeds well, and a polyamide composition excellent in desired physical properties is easily obtained.

The molar ratio between the diamine unit (X) and the dicarboxylic acid unit (Y) can be adjusted according to the blending ratio (molar ratio) of a raw material diamine and a raw material dicarboxylic acid.

The total proportion of the diamine unit (X) and the dicarboxylic acid (Y) unit in the polyamide (A) (the proportion of the total number of moles of the dicarboxylic acid unit (Y) and the diamine unit (X) based on the number of moles of all constituent units constituting the polyamide) is preferably 70 mol% or more, more preferably 80 mol% or more, still more preferably 90 mol% or more, and even more preferably 95 mol% or more, and may also be 100 mol%. When the total proportion of the diamine unit (X) and the dicarboxylic acid unit (Y) is within the above range, the polyamide (A) having more excellent desired physical properties can be obtained. In other words, the total proportion of the diamine unit (X) and the dicarboxylic acid (Y) unit in the polyamide (A) is preferably 70 to 100 mol% or less.

(Amino carboxylic acid unit)

The polyamide (A) may further contain an amino carboxylic acid unit in addition to the diamine unit (X) and the dicarboxylic acid unit (Y).

Examples of the amino carboxylic acid unit include constituent units derived from: a lactam such as caprolactam and lauryllactam; and an amino carboxylic acid such as 11-aminoundecanoic acid and 12-aminododecanoic acid. The content of the amino carboxylic acid unit in the polyamide (A) is preferably 40 mol% or less and more preferably 20 mol% or less based on 100 mol% of the total of the diamine unit (X) and the dicarboxylic acid unit (Y) constituting the polyamide (A). In other words, the content of the amino carboxylic acid unit in the polyamide (A) is preferably 0 to 40 mol% based on 100 mol% of the total of the diamine unit (X) and the dicarboxylic acid unit (Y) constituting the polyamide (A).

(Polycarboxylic acid unit)

The polyamide (A) may contain a constituent unit derived from a polycarboxylic acid having a valence of 3 or more, such as trimellitic acid, trimesic acid, or pyromellitic acid, within a range in which melt molding is possible, as long as the effects of the present invention are not impaired.

(Terminal blocking agent unit)

The polyamide (A) may contain a constituent unit derived from a terminal blocking agent (terminal blocking agent unit).

The terminal blocking agent unit is preferably 1.0 mol% or more and more preferably 2.0 mol% or more, and is preferably 10 mol% or less and more preferably 5.0 mol% or less based on 100 mol% of the diamine unit (X). In other words, the terminal blocking agent unit is preferably 1.0 to 10 mol% based on 100 mol% of the diamine unit (X).

When the content of the terminal blocking agent unit is within the above range, the polyamide (A) excellent in desired physical properties is easily obtained. The content of the terminal blocking agent unit can be made to fall within the above desired range by appropriately adjusting the amount of the terminal blocking agent at the time of charging raw materials for polymerization. In consideration of volatilization of monomer components during polymerization, it is desirable to finely adjust the amount of the terminal blocking agent to be charged so that a desired amount of the terminal blocking agent unit is introduced into the polyamide (A) obtained.

Examples of a method for obtaining the content of the terminal blocking agent unit in the polyamide (A) include, as described in JPH07-228690A, a method in which inherent viscosity (intrinsic viscosity) is measured, the total amount of terminal groups is calculated from an expression representing the relationship between the inherent viscosity and numberaverage molecular weights, and the amounts of amino groups and carboxy groups determined by titration are

subtracted therefrom, and a method in which $^1$H-NMR is used to obtain the content ratio on the basis of integrated values of signals corresponding to the diamine unit (X) and the terminal blocking agent unit, respectively, the latter being preferred.

As the terminal blocking agent, a monofunctional compound having reactivity with a terminal amino group or a terminal carboxy group can be used. Specific examples thereof include monocarboxylic acids, acid anhydrides, monoisocyanates, monoacid halides, monoesters, monoalcohols, and monoamines. From the viewpoints of reactivity and stability of blocked terminals, a monocarboxylic acid is preferable as the terminal blocking agent for terminal amino groups, and a monoamine is preferable as the terminal blocking agent for terminal carboxy groups. From the viewpoint of ease of handling, a monocarboxylic acid is more preferable as the terminal blocking agent.

The monocarboxylic acid used as the terminal blocking agent is not particularly limited as long as it has reactivity with an amino group, and examples thereof include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclopentanecarboxylic acid and cyclohexanecarboxylic acid; aromatic monocarboxylic acids such as benzoic acid, toluic acid, $\alpha$-naphthalenecarboxylic acid, $\beta$-naphthalenecarboxylic acid, methylnaphthalenecarboxylic acid, and phenylacetic acid; and an arbitrary mixture thereof. Among these, at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferable from the points of reactivity, stability of blocked terminals, and a price.

The monoamine used as the terminal blocking agent is not particularly limited as long as it has reactivity with a carboxy group, and examples thereof include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and an arbitrary mixture thereof. Among these, at least one selected from the group consisting of butylamine, hexylamine, octylamine, decylamine, stearylamine, cyclohexylamine, and aniline is preferable from the points of reactivity, a high boiling point, stability of blocked terminals, and a price.

The content of the polyamide (A) included in the total amount of the polyamide composition of the present embodiment is preferably 30 to 70 mass%, more preferably 35 to 65 mass%, and still more preferably 40 to 60 mass%. When the content of the polyamide (A) is 30 mass% or more, productivity during melt-kneading can be stabilized, and when the content of the polyamide (A) is 70 mass% or less, stable flame resistance can be imparted.

(Physical properties of polyamide (A))

The inherent viscosity of the polyamide (A) is preferably 0.5 dl/g or more and more preferably 0.7 dl/g or more, and preferably 2.0 dl/g or less and more preferably 1.5 dl/g or less. In other words, the inherent viscosity of the polyamide (A) is preferably 0.5 to 2.0 dl/g. When the inherent viscosity is within the above range, it is possible to obtain a polyamide (A) having more excellent desired physical properties.

The inherent viscosity of the polyamide (A) can be obtained by measuring the time of flow of a solution thereof using, as a solvent, concentrated sulfuric acid at a concentration of 0.2 g/dl and a temperature of 30°C, and more specifically can be obtained by the method described in Examples.

The melting point of the polyamide (A) is preferably 250°C or higher and more preferably 280°C or higher. When the melting point is within the above range, a polyamide composition having excellent heat resistance can be obtained. The upper limit of the melting point of the polyamide (A) is not particularly limited, but is preferably 330°C or lower in consideration of moldability. In other words, the melting point of the polyamide (A) is preferably 250°C to 330°C.

The melting point of the polyamide (A) can be obtained as the peak temperature of an endothermal peak that appears when temperature is raised at a rate of 10°C/minute using a differential scanning calorimetry (DSC) analyzer, and more specifically can be obtained by the method described in Examples.

The glass transition temperature of the polyamide (A) is preferably 110°C or higher and more preferably 120°C or higher. When the glass transition temperature is within the above range, a polyamide composition having excellent heat resistance can be obtained. The upper limit of the glass transition temperature of the polyamide (A) is not particularly limited, but is preferably 180°C or lower and more preferably 160°C or lower, and may be 150°C or lower, from the viewpoint of handling. In other words, the glass transition temperature of the polyamide (A) is preferably 110°C to 180°C.

The glass transition temperature of the polyamide (A) can be obtained as a temperature at an inflection point that appears when temperature is raised at a rate of 20°C/minute using a differential scanning calorimetry (DSC) analyzer, and more specifically can be obtained by the method described in Examples.

The crystallization rate of the polyamide (A) is preferably 0.02°C$^{-1}$ or more and more preferably 0.04°C$^{-1}$ or more. When the crystallization rate is within the above range, a highly productive polyamide composition can be obtained.

The crystallization rate can be obtained by the formula (Formula 1) below.

Crystallization rate (°C$^{-1}$) = 1/(melting point (°C) - crystallization temperature (°C))

The terminal amino group amount ([$NH_2$]) in the molecular chain of the polyamide (A) is preferably 5 μmol/g or more and more preferably 10 μmol/g or more, and preferably 160 μmol/g or less, more preferably 100 μmol/g or less, and still more preferably 80 μmol/g or less. In other words, the terminal amino group amount is preferably 5 to 160 μmol/g.
When the terminal amino group amount is 5 μmol/g or more, a further excellent crystallization rate can be exhibited, and good hydrolysis resistance can be exhibited. In a case where the polyamide composition of the present embodiment contains a fibrous filler (C1) as the filler (C), adhesiveness with the fibrous filler (C1) is made good, and mechanical properties can be improved. When the terminal amino group amount is 160 μmol/g or less, further excellent heat resistance is exhibited, and melt viscosity during processing of the polyamide composition is made good.
The terminal amino group amount in the present invention refers to the amount (unit: μmol) of terminal amino groups contained in 1 g of the polyamide.
The terminal amino group amount of the polyamide (A) can be obtained by titrating a phenol solution in which the polyamide (A) is dissolved using a hydrochloric acid aqueous solution, and more specifically can be obtained by the method described in Examples.
The terminal carboxy group amount ([COOH]) in the molecular chain of the polyamide (A) is preferably 2 μmol/g or more, more preferably 5 μmol/g or more, and still more preferably 10 μmol/g or more, and preferably 100 μmol/g or less and more preferably 80 μmol/g or less. In other words, the terminal carboxy group amount is preferably 2 to 100 μmol/g.
When the terminal carboxy group amount is 2 μmol/g or more, a further excellent crystallization rate is exhibited, and excellent heat resistance is easily exhibited. In a case where the polyamide composition of the present embodiment contains a fibrous filler (C1) as the filler (C), adhesiveness with the fibrous filler (C1) is made good, and mechanical properties can be improved. When the terminal carboxy group amount is 100 μmol/g or less, good hydrolysis resistance can be exhibited. Furthermore, hydrolysis in an acidic environment is suppressed, and chemical resistance is improved.
The terminal carboxy group amount in the present invention refers to the amount (unit: μmol) of terminal carboxy groups contained in 1 g of the polyamide.
The terminal carboxy group amount of the polyamide (A) can be obtained by titrating a cresol solution in which the polyamide (A) is dissolved using a potassium hydroxide solution, and more specifically can be obtained by the method described in Examples.
The ratio ([$NH_2$]/[COOH]) of the terminal amino group amount ([$NH_2$]) to the terminal carboxy group amount ([COOH]) in the molecular chain of the polyamide (A) is preferably 0.1 or more and more preferably 0.3 or more, and preferably 50 or less, more preferably 10 or less, and still more preferably 6 or less. In other words, the ratio ([$NH_2$]/[COOH]) is preferably 0.1 to 50.
When the ratio ([$NH_2$]/[COOH]) is 0.1 or more, a further excellent crystallization rate can be exhibited, and good hydrolysis resistance can be exhibited. When the ratio ([$NH_2$]/[COOH]) is 50 or less, further excellent heat resistance is exhibited.

(Method for producing polyamide (A))

The polyamide (A) can be produced by using any method known as a method for producing a polyamide. For example, the polyamide (A) can be produced by a melt polymerization method, a solid phase polymerization method, or a melt extrusion polymerization method using a dicarboxylic acid and a diamine as raw materials. Among these, a solid phase polymerization method is preferable from the viewpoint that thermal deterioration during polymerization can be more favorably suppressed.
The polyamide (A) can be produced, for example, by firstly adding a diamine, a dicarboxylic acid, and optionally a catalyst and a terminal blocking agent all at once to produce a nylon salt, subsequently heating and polymerizing same at a temperature of 200 to 250°C to form a prepolymer, and further subjecting the same to solid phase polymerization or polymerization using a melt extruder. When the final stage of the polymerization is carried out by solid phase polymerization, the polymerization is preferably carried out under reduced pressure or in an inert gas flow, and when the polymerization temperature is within the range of 200 to 280°C, the polymerization rate is high, the productivity is excellent, and coloring and gelling can be effectively suppressed. When the final stage of the polymerization is carried out using a melt extruder, the polymerization temperature is preferably 370°C or lower, and when the polymerization is carried out under such conditions, there is almost no decomposition, and the polyamide (A) with little deterioration is obtained.
Examples of the catalyst that can be used in producing the polyamide (A) include phosphoric acid, phosphorus acid, hypophosphorous acid, and salts and esters thereof. Examples of the salts and esters include a salt of phosphoric acid, phosphorus acid, or hypophosphorous acid with a metal such as potassium, sodium, magnesium, vanadium,

calcium, zinc, cobalt, manganese, tin, tungsten, germanium, titanium, or antimony; an ammonium salt of phosphoric acid, phosphorus acid, or hypophosphorous acid; and an ethyl ester, an isopropyl ester, a butyl ester, a hexyl ester, an isodecyl ester, an octadecyl ester, a decyl ester, a stearyl ester, and a phenyl ester of phosphoric acid, phosphorus acid, or hypophosphorous acid.

The amount of the catalyst used is preferably 0.01% by mass or more and more preferably 0.05% by mass or more, and is preferably 1.0% by mass or less and more preferably 0.5% by mass or less, based on 100% by mass of the total mass of raw materials. In other words, the amount of the catalyst used is preferably 0.01 to 1.0 mass% based on 100% by mass of the total mass of raw materials.

When the amount of the catalyst used is the above-described lower limit or more, the polymerization proceeds favorably. When the amount of the catalyst used is the above-described upper limit or less, impurities derived from the catalyst are less likely to be generated, and for example, when a polyamide composition is formed into a film, defects due to the impurities can be prevented.

[Halogen-free flame-retardant (B)]

The polyamide composition of the present embodiment contains a halogen-free flame-retardant (B). By virtue of containing the halogen-free flame-retardant (B), flame resistance of the polyamide composition can be improved while reducing an environment load. The halogen-free flame-retardant (B) is not particularly limited, and a compound known as a flame-retardant free from halogen elements can be used. A phosphorus-based flame-retardant including elemental phosphorus is preferably used as the halogen-free flame-retardant (B), and specific examples thereof include a red phosphorus-based flame-retardant, a phosphoric acid ester-based flame-retardant, a phosphoric acid amide-based flame-retardant, a (poly)phosphoric acid salt-based flame-retardant, a phosphazene-based flame-retardant, and a phosphine-based flame-retardant. Among these, phosphine-based flame-retardant is preferable.

Examples of the phosphine-based flame-retardant include a monophosphinate and a diphosphinate (hereinafter, the two are sometimes abbreviated to collectively the "phosphinate").

One kind of these phosphinates may be used singly, or two or more kinds thereof may be used in combination.

Examples of the monophosphinate include a compound represented by General Formula (1) below.

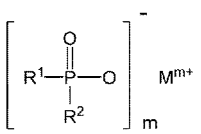

(1)

Examples of the diphosphinate include a compound represented by General Formula (2) below.

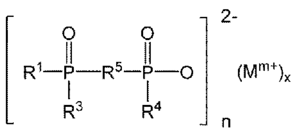

(2)

In General Formula (1) and General Formula (2), $R^1$, $R^2$, $R^3$, and $R^4$ each independently represent an alkyl group having 1 to 6 carbon atoms, an aryl group having 6 to 12 carbon atoms, or an arylalkyl group having 7 to 20 carbon atoms. $R^5$ represents an alkylene group having 1 to 10 carbon atoms, an arylene group having 6 to 10 carbon atoms, an alkylarylene group having 7 to 20 carbon atoms, or an arylalkylene group having 7 to 20 carbon atoms. M represents calcium (ion), magnesium (ion), aluminum (ion), or zinc (ion), m is 2 or 3, n is 1 or 3, and x is 1 or 2.

The alkyl group includes a linear or branched saturated aliphatic group. The aryl group may be unsubstituted or may be substituted with various substituents, and examples of the substituents include a phenyl group, a benzyl group, an o-toluyl group, and 2,3-xylyl group.

The phosphinate described above can be produced in an aqueous solution using a phosphinic acid and a metal component such as a metal carbonate, a metal hydroxide, or a metal oxide as disclosed in EP699708A and JPH08-73720. These phosphinates are usually monomeric compounds but may include a polymeric phosphinate with a condensation degree of 1 to 3 depending on reaction conditions in some environments.

Examples of a monophosphinic acid and a diphosphinic acid constituting the phosphinate include dimethylphosphinic acid, ethyl methylphosphinic acid, diethylphosphinic acid, methyl-n-propylphosphinic acid, methane di(methylphosphinic acid), benzene-1,4-di(methylphosphinic acid), methylphenylphosphinic acid, and diphenylphosphinic acid.

Examples of the metal component constituting the phosphinate include a calcium ion, a magnesium ion, an

aluminum ion, and a zinc ion.

Specific examples of the phosphinate include calcium dimethyl phosphinate, magnesium dimethyl phosphinate, aluminum dimethyl phosphinate, zinc dimethyl phosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methylenebis(methylphosphinate), magnesium methylenebis(methylphosphinate), aluminum methylenebis(methylphosphinate), zinc methylenebis(methylphosphinate), calcium phenylene-1,4-bis(methylphosphinate), magnesium phenylene-1,4-bis(methylphosphinate), aluminum phenylene-1,4-bis(methylphosphinate), zinc phenylene-1,4-bis(methylphosphinate), calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate.

Among these, from the viewpoints of flame resistance and electric characteristics of the polyamide composition obtained, and availability of the phosphinate, calcium dimethyl phosphinate, aluminum dimethyl phosphinate, zinc dimethyl phosphinate, calcium ethylmethylphosphinate, aluminum ethylmethylphosphinate, zinc ethylmethylphosphinate, calcium diethyl phosphinate, aluminum diethyl phosphinate, and zinc diethyl phosphinate are preferable. One kind of these phosphinates may be used singly, or two or more kinds thereof may be used in combination.

From the point of mechanical properties (toughness and stiffness) of the polyamide composition and a molded article formed therefrom and the point of appearance of the molded article, powder obtained by pulverizing a phosphinate to achieve an average particle diameter of 100 μm or less is preferably used and powder obtained by pulverizing a phosphinate to achieve an average particle diameter of 50 μm or less is more preferably used as the phosphinate. Use of a powdery phosphinate with, for example, an average particle diameter of about 0.5 to 20 μm is preferable not only because a polyamide composition excellent in flame resistance can be obtained but also because stiffness of a molded article is improved.

Note that the average particle diameter herein is a volume average particle diameter and is a value measured by a laser diffraction particle size distribution analyzer.

The phosphinate is not necessarily a completely pure substance and may contain an unreacted substance or a by-product, as long as the effects of the present invention are not impaired.

The content of the halogen-free flame-retardant (B) is preferably 5 parts by mass or more, more preferably 10 parts by mass or more, still more preferably 15 parts by mass or more, and further preferably 20 parts by mass or more, and preferably 100 parts by mass or less, more preferably 75 parts by mass or less, still more preferably 70 parts by mass or less, further preferably 50 parts by mass or less, and even more preferably 40 parts by mass or less based on 100 parts by mass of the polyamide (A). In other words, the content of the halogen-free flame-retardant (B) is preferably 5 to 100 parts by mass based on 100 parts by mass of the polyamide (A).

When the content of the halogen-free flame-retardant (B) is the above-described lower limit or more, a polyamide composition excellent in flame resistance can be obtained. When the content of the halogen-free flame-retardant (B) is the above-described upper limit or less, generation of decomposed gas during melt-kneading, decrease in flowability (in particular, flowability in a molded article) during molding processing, mold deposites can be suppressed, and deterioration of mechanical properties and deterioration of appearance of a molded article can also be suppressed. Pyrolysis can be suppressed by side feeding the halogen-free flame-retardant (B) during melt-kneading and shortening the holding time during melt-kneading, not only suppressing generation of gas arising from a degradant of the flame-retardant and corrosion of metal parts but also suppressing deterioration of flame resistance. When using multiple kinds of the halogen-free flame-retardant (B), the total amount thereof may fall within the above range.

[Fibrous filler (C)]

The polyamide composition of the present embodiment may further contain a filler (C). When the filler (C) is used, a polyamide composition excellent in thin-gage flame resistance, heat resistance, moldability, and mechanical strength can be obtained.

Fillers having various forms such as a fiber form, a plate form, an acicular form, a powder form, and a cloth form can be used as the filler (C). Specifically, an inorganic or organic fibrous filler (C1) such as glass fibers, carbon fibers, all-aromatic polyester fibers (aramide fibers), liquid crystal polymer (LCP) fibers, gypsum fibers, yellow brass fibers, ceramic fibers, boron whisker fibers, and halloysite; a plate-shaped filler such as glass flakes and mica; an acicular filler (C2) such as potassium titanate whiskers, aluminum borate whiskers, calcium carbonate whiskers, magnesium sulfate whiskers, wollastonite, sepiolite, xonotlite, and zinc oxide whiskers; a powdery filler such as silica, silica-alumina, alumina, barium carbonate, magnesium carbonate, aluminum nitride, boron nitride, potassium titanate, titanium oxide, magnesium hydroxide, aluminum silicate (kaolin, clay, pyrophyllite, bentonite), calcium silicate, magnesium silicate (attapulgite), alumina borate, calcium sulfate, barium sulfate, magnesium sulfate, asbestos, glass beads, carbon black,

graphene, graphite, carbon nanotubes, silicon carbide, sericite, hydrotalcite, montmorillonite, molybdenum disulfide, ultra-high molecular weight polyethylene particles, phenol resin particles, cross-linked styrene-based resin particles, and cross-linked acrylic resin particles; and a cloth-like filler such as glass cloth are included. One kind of these fillers may be used singly, or two or more kinds thereof may be used in combination.

A surface of the filler (C) may be subjected to a surface treatment with a silane coupling agent, a titanium coupling agent, a polymer compound such as an acrylic resin, a urethane resin, and an epoxy resin, or another low molecular weight compound for the purpose of enhancing dispersibility in the polyamide and adhesiveness.

Among the filler (C), at least one selected from the group consisting of the fibrous filler (C1) and the acicular filler (C2) is preferable because costs are low, and a molded article with high mechanical strength can be obtained. From the viewpoints of high strength and low costs, the fibrous filler (C1) is preferable, and glass fibers are more preferable. From the viewpoint of obtaining a molded article with high surface smoothness, the acicular filler (C2) is preferable.

As the fibrous filler (C1) and the acicular filler (C2), at least one selected from the group consisting of glass fibers, wollastonite, potassium titanate whiskers, calcium carbonate whiskers, and aluminum borate whiskers is preferable, at least one selected from the group consisting of glass fibers and wollastonite is more preferable, and glass fibers are still more preferable.

The average fiber length of the fibrous filler (C1) is preferably 1 to 10 mm, more preferably 1 to 7 mm, and still more preferably 2 to 4 mm. The average fiber diameter of the fibrous filler (C1) is preferably 6 to 20 $\mu$m and more preferably 6 to 15 $\mu$m from the viewpoint of obtaining mechanical strength.

The average fiber length and the average fiber diameter of the fibrous filler (C1) can be obtained by measuring, through image analysis using an electronic microscope, fiber lengths and fiber diameters of arbitrarily selected 400 fibers of the fibrous filler (C1), and calculating respective average values.

In addition, the average fiber length and the average fiber diameter of the fibrous filler (C1) in the polyamide composition or in a molded article obtained by molding the polyamide composition can be obtained through image analysis using an electronic microscope in a similar manner as described above after dissolving the polyamide composition or the molded article in an organic solvent, for example, to extract the fibrous filler (C1).

Examples of a cross-sectional shape of the fibrous filler (C1) and the acicular filler (C2) include a circular shape, a rectangular shape, an oval shape which is almost a rectangular shape, an elliptic shape, a cocoon shape, and a cocoon shape in which the central portion in the longitudinal direction is narrowed. Among these, the fibrous filler (C1) and the acicular filler (C2) having a cross-sectional shape which is a circular shape, a rectangular shape, an oval shape which is almost a rectangular shape, an elliptic shape, or a cocoon shape are preferable.

When the fibrous filler (C1) is glass fibers, a specific composition thereof includes an E glass composition, a C glass composition, an S glass composition, and an alkali-resistant glass composition. The tensile strength of the glass fibers is arbitrary but is usually 290 $kg/mm^2$ or more. Among these, E glass is preferable from the viewpoint of availability. These glass fibers are preferably subjected to a surface treatment with a silane coupling agent such as $\gamma$-methacryloxypropyltrimethoxysilane, $\gamma$-glycidoxypropyltrimethoxysilane, and $\gamma$-aminopropyltriethoxysilane, and the amount of the silane coupling agent attached is usually 0.01% by mass or more based on the mass (total amount of the glass fibers and the surface treatment agent) of the glass fibers.

When the polyamide composition of the present embodiment contains the filler (C), the content thereof is preferably 0.1 parts by mass or more and 200 parts by mass or less, more preferably 1 part by mass or more and 180 parts by mass or less, and still more preferably 5 parts by mass or more and 150 parts by mass or less, based on 100 parts by mass of the polyamide (A). When the content of the filler (C) is 0.1 parts by mass or more based on 100 parts by mass of the polyamide (A), toughness and mechanical strength of the polyamide composition of the present embodiment are improved, and when the content of the filler (C) is 200 parts by mass or less, a polyamide composition excellent in moldability can be obtained.

[Flame-retardant aid (D)]

The polyamide composition of the present embodiment may contain a flame-retardant aid (D). When the polyamide composition of the present embodiment contains the flame-retardant aid (D), more excellent flame resistance can be exhibited, and melt-kneading and molding processing of the polyamide composition are successfully carried out.

Although the flame-retardant aid (D) is not particularly limited, examples thereof include phosphites, and specific examples thereof include sodium phosphite, potassium phosphite, calcium phosphite, zinc phosphite, ammonium phosphite, aluminum phosphite, and aluminum hydrogen phosphite. From the viewpoint of exhibiting more excellent flame resistance, aluminum phosphite and aluminum hydrogen phosphite are preferable. One kind of the flame-retardant aid (D) may be used singly, or multiple kinds thereof may be used in combination.

When the polyamide composition of the present embodiment contains the flame-retardant aid (D), the content thereof is preferably 1 part by mass or more and 20 parts by mass or less, more preferably 3 parts by mass or more and 15 parts by mass or less, and still more preferably 5 parts by mass or more and 10 parts by mass or less, based

on 100 parts by mass of the polyamide (A).

[Additional additives]

The polyamide composition of the present embodiment may contain, if needed, an additional additive in addition to the polyamide (A) and the halogen-free flame-retardant (B), and the filler (C) and the flame-retardant aid (D), which are optionally used, described above.

Examples of the additional additive include a stabilizer such as a copper compound; a heat stabilizer such as a hindered phenol-based heat stabilizer, hindered amine-based heat stabilizer, a phosphorus-based heat stabilizer, and a thio-based heat stabilizer; a colorant; an ultraviolet absorber; a photostabilizing agent; an antistatic agent; a nucleating agent; a plasticizer; a sliding agent; a lubricant; a dispersant; an oxygen absorber; a hydrogen sulfide adsorbent; a crystallization retardant; an impact modifier such as an $\alpha$-olefin-based copolymer and rubber; and a drip preventing agent such as a fluororesin.

The content of the additional additive is not particularly limited as long as the effects of the present invention are not impaired, but is preferably 0.02 to 200 parts by mass, more preferably 0.03 to 100 parts by mass, still more preferably 0.05 to 50 parts by mass, and further preferably 0.1 to 20 parts by mass based on 100 parts by mass of the polyamide (A).

The total content of the polyamide (A) and the halogen-free flame-retardant (B) in the total amount of the polyamide composition of the present embodiment is preferably 40% by mass or more, more preferably 50% by mass or more, and still more preferably 55% by mass or more.

As the polyamide composition of the present embodiment includes the polyamide (A) and the halogen-free flame-retardant (B), the polyamide composition of the present embodiment has excellent flame resistance, moldability, and hydrolysis resistance, while maintaining excellent physical properties of the polyamide (A).

(Method for producing polyamide composition)

The method for producing the polyamide composition is not particularly limited, and a method capable of uniformly mixing the polyamide (A) and the halogen-free flame-retardant (B), and the filler (C), the flame-retardant aid (D), and the additive(s) described above which are optionally used can be preferably employed. For the mixing, in general, a melt-kneading method using a single screw extruder, a twin screw extruder, a kneader, or a Banbury mixer is preferably employed. Conditions for melt-kneading are not particularly limited, and a method in which melt-kneading is conducted for about 1 to 30 minutes at a temperature within the range of about 10 to 50°C higher than the melting point of the polyamide is exemplified.

(Physical properties of polyamide composition)

The polyamide composition preferably has flexural strength of 100 MPa or more and more preferably has flexural strength of 150 MPa or more. In addition, the polyamide composition preferably has a flexural modulus of 2 GPa or more and more preferably has a flexural modulus of 5 GPa or more. When the flexural strength and the flexural modulus are within the above ranges, a polyamide composition having excellent mechanical properties can be obtained.

The flexural strength and the flexural modulus of the polyamide composition can be obtained by injection-molding the polyamide composition into a test specimen having a thickness of 4 mm and subsequently carrying out a flexural test and more specifically can be obtained by the method described in Examples.

<Molded body>

As one of the present embodiment, a molded body composed of the above-described polyamide composition can be provided. The method for producing the molded body is not particularly limited, and a known method can be used. In addition, an additive such as a chain extender may be added during molding, and treatment such as heat treatment or electron beam crosslinking may be further carried out after molding.

The molded article of the present embodiment can be used as various molded articles for electric parts, electronic parts, automobile parts, industrial parts, water faucet parts, fibers, films, sheets, household goods, leisure goods, and other parts with arbitrary shapes and applications.

Examples of the electric parts and the electronic parts include connectors (DDR sockets) such as an FPC connector, a B to B connector, a card connector, an SMT connector (a coaxial connector), and a memory card connector; SMT relays; SMT bobbins; sockets such as a memory socket and a CPU socket; switches such as a command switch and an SMT switch; optical components such as an optical fiber component and an optical sensor; LED application components such as an LED reflector; electronic substrates such as a solar cell substrate, an LED-mounted substrate,

a flexible printed wiring board, and a resin-molded circuit board; and in-car connectors.

Examples of the automobile parts include cooling components such as a thermostat housing, a housing for a coolant control valve, a housing for a thermal management module, a radiator tank, a radiator hose, a water outlet, a water inlet, a water pump housing, and a rear joint; intake and exhaust system components such as an intercooler tank, an intercooler case, a turbo duct pipe, an EGR cooler case, a resonator, a throttle body, an intake manifold, and a tail pipe; fuel system components such as a fuel delivery pipe, a gasoline tank, a quick connector, a canister, a pump module, a fuel pipe, an oil strainer, a lock nut, and a seal material; structural components such as a mount bracket, a torque rod, and a cylinder head cover; drive system components such as a bearing retainer, a gear tensioner, a head lamp actuator gear, a throttle valve gear, a slide door roller, and a clutch peripheral component; brake system components such as an air brake tube; in-vehicle electrical components such as a wire harness connector, a motor component, a sensor, an ABS bobbin, a combination switch, and an in-vehicle switch in an engine room; and interior and exterior parts such as a slide door damper, a door mirror stay, a door mirror bracket, an inner mirror stay, a roof rail, an engine mount bracket, an inlet pipe of an air cleaner, a door checker, a plastic chain, an emblem, a clip, a breaker cover, a cup holder, an airbag, a fender, a spoiler, a radiator support, a radiator grille, a louver, an air scoop, a hood bulge, a back door, and a fuel sender module.

Examples of the industrial parts include gas pipes, oilfield pipes, hoses, anti-termite cables (such as communication cables and, pass cables), coating parts of powder coated products (such as inner coating of water pipes), submarine oilfield pipes, pressure hoses, hydraulic tubes, paint tubes, housings and impellers for fuel pumps, separators, supercharging ducts, butterfly valves, conveyor roller bearings, railroad tie spring clip supports, outboard engine covers, generator engine covers, blades for wind power generators, irrigation valves, large switches, monofilaments (extruded threads) such as a fishing net, and semiconductor casings such as an insulated gate bipolar transistor (IGBT).

Examples of the water faucet parts include housings for components for conveying tap water, housings for components for storing tap water, housings for filter casings, housings for water outlets, housings for pipes, housings for bathroom faucets (water switching valves and water amount switching valves), housings for sanitary components, housings for kitchen water faucet, housings for water heaters, valve components (shut-off balls, slides, and cylinders) and valve component housings, toilet water shut-off valves, housings in a showerhead, valve housings for water heaters, joints for housing equipment piping (underfloor piping), joints for bathroom faucets, joints for water piping, pipe joints, housings for water meters, components for water meters (bearings, propellers, and pins) and water meters, housings for gas meters, housings for distributors, valve/pump housings for household apparatuses, steam resistant components for steam irons, inner containers for electric kettles, components (washing tanks, washing nozzles, and baskets) for dishwashers, housings for pumps, pump components (for example, turbine wheels and impellers), housings for water supply systems (such as hot water tanks), housings for heating systems, housings for cooling systems, water volume regulating valves, pressure reducing valves, relief valves, electromagnetic valves, three-way valves, thermo-valves, water temperature sensors, water amount sensors, and bathtub adapters.

Examples of the fibers include airbag base fabric, heat-resistant filters, reinforcing fibers, brush bristles, fishing lines, tire cords, artificial turf, carpets, and fibers for seat sheets.

Examples of the films and sheets include heat-resistant pressure-sensitive adhesive tapes such as heat-resistant masking tapes and industrial tapes; magnetic tape materials such as cassette tapes, data storage magnetic tapes for digital data storage, and video tapes; food packaging materials such as pouches for retort foods, individual packages for confectionery, and packages for processed meat products; and electronic component packaging materials such as packages for semiconductor packages.

Examples of the household goods include valve/pump housings for tea and coffee makers; valve/pump housings for cooking appliances such as rice cookers and steam cookers; steam-resistant components (such as an upper lid of a rice cooker) for cooking appliances such as rice cookers and steam cookers; slide components (such as gears) of cooking appliances such as rice cookers and steam cookers; slide components (such as a gear for a gear pump) of professional cooking appliances; and steam-resistant components (such as a pipe for a professional rice cooker) for professional cooking appliances.

Examples of the leisure goods include inner soles of sports shoes; frames and grommets of rackets; heads and sleeves of golf clubs; reels and rods of fishing goods; screws for boats; and suspensions, gears, saddles, and bottle cages for bicycles.

Among these, since the polyamide composition of the present embodiment is excellent in heat resistance, flame resistance, and moldability and also excellent in hydrolysis resistance, the polyamide composition of the present embodiment can be suitably used for electric parts and electronic parts for which a large number of parts are required to be produced in a short time. Specifically, the polyamide composition of the present embodiment can be suitably used for electric parts and electronic parts involving an SMT step and more specifically for surface mounted parts such as SMT-compatible connectors, SMT relays, SMT bobbins, sockets, command switches, SMT switches, camera modules, power source parts, sensors, capacitor base plates, hard disk parts, resistors, fuse holders, coil bobbins, and IC housings.

Examples

Hereinafter, the present invention will be specifically described with reference to Examples and Comparative Examples, but the present invention is not limited thereto.
Each evaluation in Examples and Comparative Examples was performed in accordance with the following methods.

<Polyamide>

Inherent viscosity

The inherent viscosity (dl/g) of each of polyamides obtained in Examples and Comparative Examples was determined from the formula below using concentrated sulfuric acid as a solvent at a concentration of 0.2 g/dl and a temperature of 30°C.

$$\eta = [\ln(t_1/t_0)]/c$$

In the above formula, $\eta$ represents the inherent viscosity (dl/g), $t_0$ represents the flow-down time (second) of the solvent (concentrated sulfuric acid), ti represents the flow-down time (second) of a sample solution, and c represents the concentration (g/dl) of the sample in the sample solution (that is, 0.2 g/dl).

Melting point, crystallization temperature, and glass transition temperature

The melting point, crystallization temperature, and glass transition temperature of each of the polyamides obtained in Examples and Comparative Examples were measured using a differential scanning calorimetry analyzer "DSC7020" manufactured by Hitachi High-Tech Science Corporation.
The melting point and crystallization temperature were measured in accordance with ISO 11357-3 (second edition, 2011). Specifically, in a nitrogen atmosphere, a sample (polyamide) was heated from 30°C to 340°C at a rate of 10°C/minute, held at 340°C for 5 minutes to completely melt the sample, then cooled to 50°C at a rate of 10°C/minute, held at 50°C for 5 minutes, and then heated again to 340°C at a rate of 10°C/minute. The peak temperature of the exothermic peak that appeared when the temperature was decreased was defined as the crystallization temperature, and the peak temperature of the endothermic peak that appeared when the temperature was increased again was defined as the melting point (°C).
The glass transition temperature (°C) was measured in accordance with ISO 11357-2 (second edition, 2013). Specifically, in a nitrogen atmosphere, a sample (polyamide) was heated from 30°C to 340°C at a rate of 20°C/minute, held at 340°C for 5 minutes to completely melt the sample, then cooled to 50°C at a rate of 20°C/minute, and held at 50°C for 5 minutes. The temperature of the inflection point that appeared when the temperature was increased again to 200°C at a rate of 20°C/minute was defined as the glass transition temperature (°C).

Crystallization rate

The crystallization rate of each of the polyamides obtained in Examples and Comparative Examples was determined by the formula (Formula 1) below.

Crystallization rate ($°C^{-1}$) = 1/(melting point (°C) - crystallization temperature (°C))

In (Formula 1), the "melting point (°C)" and the "crystallization temperature (°C)" are measured values obtained by the above methods. In Table 1, the unit of the crystallization rate is expressed as "1/°C", which has the same meaning as "$°C^{-1}$".

Terminal amino group amount ([$NH_2$])

Terminal amino group amounts in the polyamides obtained in Examples and Comparative Examples were calculated by adding thymol blue, which is an indicator, to a solution in which 1 g of each polyamide was dissolved in 30 mL of phenol and titrating same using a 0.01 mol/L hydrochloric acid aqueous solution. The terminal amino group amounts in the polyamides were represented by [$NH_2$] in Table 1.

Terminal carboxy group amount ([COOH])

Terminal carboxy group amounts in the polyamides obtained in Examples and Comparative Examples were calculated by titrating, with a potentiometric titrator manufactured by Kyoto Electronics Manufacturing Co., Ltd., a solution in which 0.5 g of each polyamide was dissolved in 40 mL of cresol using a 0.01 mol/L potassium hydroxide solution. The terminal carboxy group amounts in the polyamides were represented by [COOH] in Table 1.

Ratio ([$NH_2$]/[COOH])

The ratios ([$NH_2$]/[COOH]) were calculated from values of the terminal amino group amounts ([$NH_2$]) and the terminal carboxy group amounts ([COOH]) obtained as above.

<Polyamide composition>

«Production of test specimen»

Each of polyamide compositions obtained in Examples and Comparative Examples was molded with an injection molding machine (clamping force: 100 tons, screw diameter: ø32 mm) manufactured by Sumitomo Heavy Industries, Ltd. and a T runner mold at a cylinder temperature 20°C to 30°C higher than the melting point of the polyamide under the condition of a mold temperature of 140°C for the polyamide compositions of Examples 1 to 8 and 11 and Comparative Examples 1, 2, 4, and 5 and under the condition of a mold temperature of 170°C for the polyamide compositions of Examples 9 and 10 and Comparative Example 3 to produce a general-purpose test specimen type A1 (dumbbell test specimen described in JIS K7139:2009, thickness: 4 mm, whole length: 170 mm, length of parallel section: 80 mm, width of parallel section: 10 mm).

Flexural strength, flexural modulus

Using the general-purpose test specimen type A1 (4 mm thick) produced in the above method, the flexural strength (MPa) and the flexural modulus (GPa) were measured with a universal material tester (manufactured by Instron) in accordance with ISO178 (second edition, 2012) under the conditions of test speed of 2 mm/minute and a fulcrum distance of 64 mm.

Color stability

The general-purpose test specimen type A1 (4 mm thick) produced in the above method was subjected to heat treatment in a hot air dryer at 150°C for 50 hours. The change in color of the test specimen after treatment was visually observed, compared with a test specimen before heat treatment, and evaluated according to the following criteria. The scores "A" and "B" were graded as acceptable, and the score "C" was graded as unacceptable.

[Evaluation criteria]

A: There is no change in color.
B: The color is slightly changed to yellow.
B: The color is clearly changed to yellow.

Heat aging resistance

The general-purpose test specimen type A1 (4 mm thick) produced in the above method was subj ected to heat treatment in a hot air dryer at 150°C for 50 hours. The molecular weights of the test specimen after treatment and a test specimen without heat treatment were measured, and the molecular weight change rate was calculated by the following formula (Formula 2). Evaluation was made from the calculated molecular weight change rate according to the following criteria. The scores "A" and "B" were graded as acceptable, and the score "C" was graded as unacceptable. Incidentally, the molecular weights of the test specimens were measured according to the molecular weight measurement described later.

Molecular weight change rate (%) = ((molecular weight after heat treatment - molecular weight before heat treatment)/(molecular weight before heat treatment)) × 100

[Evaluation criteria]

A: The molecular weight change rate is less than ±10%
B: The molecular weight change rate is ±10% or more and less than ±20%
C: The molecular weight change rate is ±20% or more

Hydrolysis resistance

The general-purpose test specimen type A1 (4 mm thick) produced in the above method was immersed in an antifreeze liquid (an aqueous solution obtained by diluting twice "Super Long Life Coolant" (pink) manufactured by TOYOTA MOTOR CORPORATION) in a pressure-resistant container, and the pressure-resistant container was left to stand, for 100 hours, in an isothermal bath the temperature of which was set to 130°C. The molecular weights of the test specimen taken out and a test specimen without immersion treatment were measured, and the molecular weight change rate was calculated by the following formula (Formula 3). Evaluation was made from the calculated molecular weight change rate according to the following criteria. The scores "A" and "B" were graded as acceptable, and the score "C" was graded as unacceptable. Incidentally, the molecular weights of the test specimens were measured according to the molecular weight measurement described later.

Molecular weight change rate (%) = ((molecular weight after immersion treatment - molecular weight before immersion treatment)/(molecular weight before immersion treatment)) × 100

[Evaluation criteria]

A: The molecular weight change rate is less than ±10%
B: The molecular weight change rate is ±10% or more and less than ±20%
C: The molecular weight change rate is ±20% or more

Molecular weight measurement

The molecular weight of the general-purpose test specimen type A1 was obtained by gel permeation chromatography (GPC) as a molecular weight in terms of standard polymethyl methacrylate. Specifically, a 1,1,1,3,3,3-hexafluoroisopropanol (HFIP) solution in which sodium trifluoroacetate was dissolved at a proportion of 0.85 g per 1 kg of HFIP was prepared as an eluent, and 1.5 mg of the specimen (the general-purpose test specimen type A1 mentioned above) was weighed in terms of resin and dissolved in 3 mL of the eluent. The obtained solution was passed through a 0.2 μm membrane filter to produce a measurement sample, and measurement was conducted under the following conditions.

(Measurement conditions)

Device: HLC-8320GPC (manufactured by Tosoh Corporation)
Column: two pieces of TSkgel Super HM-H (manufactured by Tosoh Corporation) were coupled in series.
Eluent: 10 mmol/L sodium trifluoroacetate/HFIP solution
Flow rate: 0.5 mL/minute (reference column: 0.25 mL/minute)
Sample injection amount: 30 μL
Column temperature: 40°C
Standard polymethyl methacrylate: Shodex Standard M-75 from Showa Denko K.K., Polymethyl methacrylates from

Agilent Technologies Japan, Ltd. (Polymethyl methacrylates with a molecular weight of 1010, 535)
Detector: UV (254 nm) detector

Moldability

The shortest cooling time at which neither sinks nor voids appears in the test specimen and which allows smooth release from the mold was determined when the general-purpose test specimen type A1 (4 mm thick) was produced in the "Production of test specimen" above. Evaluation was made from the cooling time according to the following criteria. The scores "A" and "B" were graded as acceptable, and the score "C" was graded as unacceptable.

[Evaluation criteria]

A: Cooling time is within 10 seconds
B: Cooling time exceeds 10 seconds and is within 15 seconds
C: Cooling time exceeds 15 seconds

Flame resistance

Flame resistance was evaluated in accordance with the stipulation of the UL-94 standard.

An injection molding machine (clamping force: 80 tons, screw diameter: ø26 mm) manufactured by NISSEI PLASTIC INDUSTRIAL CO., LTD. was used. A polyamide composition was molded using each of polyamide compositions obtained in Examples and Comparative Examples at a cylinder temperature 20°C to 30°C higher than the melting point of the polyamide under the condition of a mold temperature of 140°C for the polyamide compositions of Examples 1 to 9 and 11 and Comparative Examples 1 to 3 and 5 and under the condition of a mold temperature of 170°C for the polyamide compositions of Example 10 and Comparative Example 4. A specimen with a thickness of 0.4 mm, a width of 13 mm, and a length of 125 mm was obtained.

Thereafter, the upper end of the obtained specimen was cramped to vertically fix the specimen, predetermined blue flame with a height of 20 ± 1 mm was applied to the lower end of the specimen for 10 seconds and then separated from the specimen, and the (first) combustion time of the specimen was measured. Immediately after fire extinction, flame was applied to the lower end of the specimen again and separated from the specimen, and the (second) combustion time of the specimen was measured. The same measurement was repeated for five pieces to obtain ten data in total including five data on the first combustion time and five data on the second combustion time. The total of the ten data was denoted as T, the maximum value among the ten data was denoted as M, and evaluation was made according to the following evaluation criteria.

Presence or absence of drips during contact with flame was also visually observed.

[Evaluation criteria]

V-0: T was 50 seconds or less, M was 10 seconds or less, flame did not grow up to reach the cramp, and cotton 12 inches below the specimen was not ignited even when meltage with flame dropped.
V-1: T was 250 seconds or less, M was 30 seconds or less, flame did not grow up to reach the cramp, and cotton 12 inches below the specimen was not ignited even when meltage with flame dropped.
V-2: T was 250 seconds or less, M was 30 seconds or less, flame did not grow up to reach the cramp, and cotton 12 inches below the specimen was ignited when meltage with flame dropped.
X: none of the evaluation criteria in UL-94 described above was applied.

Blistering resistance

An injection molding machine (clamping force: 18 tons, screw diameter: ø18 mm) manufactured by Sumitomo Heavy Industries, Ltd. was used. Each of the polyamide compositions obtained in Examples and Comparative Examples was used, and a cylinder temperature 20°C to 30°C higher than the melting point of the polyamide was employed. A polyamide composition was molded (through injection molding) using a T runner mold under the condition of a mold temperature of 140°C for the polyamide compositions of Examples 1 to 9 and 11 and Comparative Examples 1 to 3 and 5 and under the condition of a mold temperature of 170°C for the polyamide compositions of Example 10 and Comparative

Example 4. A specimen (sheet) with a length of 30 mm, a width of 10 mm, and a thickness of 1 mm was prepared.

The obtained specimen was left to stand for 168 hours at a temperature of 85°C and a relative humidity of 85%. Thereafter, the specimen was subjected to a reflow test using an infrared heating furnace (SMT scope manufactured by SANYOSEIKO. CO., LTD). In the reflow test, the temperature was increased from 25°C to 150°C over 60 seconds, then increased to 180°C over 90 seconds, further increased to a peak temperature over 60 seconds, and kept at the peak temperature for 20 seconds.

The reflow test was conducted with the peak temperature varied from 250°C to 270°C by 10°C. After the completion of the reflow test, the appearance of the specimen was visually observed. The temperature at which the specimen did not melt and blistering did not occur was taken as a blistering resistance temperature, and indicators for blistering resistance were determined as follows; a case where the blistering resistance temperature exceeded 260°C was rated as "A"; a case where the blistering resistance temperature was 250°C or higher and 260°C or lower was rated as "B"; and a case where the blistering resistance temperature was less than 250°C was rated as "C". Scores "A" and "B" were acceptable levels for practical use.

[Example 1]

Into an autoclave having an internal volume of 40 litters were put 5400 g of terephthalic acid, 5260 g of a mixture [4/1/95 (molar ratio)] of 2-ethyl-1,7-heptanediamine, 2-propyl-1,6-hexanediamine, and 2-methyl-1,8-octanediamine, 121 g of benzoic acid, 10 g of sodium phosphinate monohydrate (0.1% by mass with respect to the total mass of the raw materials), and 4.8 litters of distilled water, and nitrogen replacement was carried out. The mixture was stirred at 150°C for 30 minutes, and the temperature inside the autoclave was then increased to 220°C over two hours. At this time, the pressure inside the autoclave increased to 2 MPa. Heating was continued for five hours while maintaining the pressure at 2 MPa, and the reaction was allowed to proceed by gradually removing the water vapor. Thereafter, the pressure was decreased to 1.3 MPa over 30 minutes, and the reaction was further conducted for one hour to obtain a prepolymer. The obtained prepolymer was dried at 100°C under reduced pressure for 12 hours and pulverized to a particle diameter of 2 mm or less. The pulverized prepolymer was subjected to solid phase polymerization at 230°C and 13 Pa (0.1 mmHg) for 10 hours to obtain a polyamide (A) having a melting point of 282°C.

A pellet-shaped polyamide composition was obtained by feeding, from the upstream hopper of a twin screw extruder ("BTN-32" manufactured by Research Laboratory of Plastics Technology Co., Ltd.), the obtained polyamide (A), a halogen-free metal phosphinate-based flame-retardant (aluminum diethyl phosphinate) ("Exolit (registered trademark) OP1230" manufactured by Clariant Chemicals Ltd) as the halogen-free flame-retardant (B), heat stabilizer (1): a phosphorus-based heat stabilizer ("Irgafos 168" manufactured by BASF SE) and heat stabilizer (2): a hindered phenol-based heat stabilizer ("Irganox 1098" manufactured by BASF SE) as the heat stabilizer, a low molecular weight polyolefin lubricant ("HiWAX 200P" manufactured by Mitsui Chemicals, Inc.) as the lubricant, and talc ("TALC #5000S" manufactured by Fuji talc industrial Co., Ltd.) as the nucleating agent; and feeding, from the side feeding port on the downstream side of the extruder, glass fibers (1) ("CS-3J256S" manufactured by NITTO BOSEKI CO., LTD.; cross-sectional shape: circular shape; values in catalog: average fiber length is 3 mm, and average fiber diameter is 11 $\mu$m) and glass fibers (2) ("CSH3PA870S" manufactured by NITTO BOSEKI CO., LTD.; cross-sectional shape: cocoon shape (HIS); values in catalog: average fiber length is 3 mm, average fiber major axis length is 20 $\mu$m, and average fiber minor axis length is 10 $\mu$m) as the filler (C) such that each of the proportions shown in Table 1 was achieved, followed by melt-kneading, extrusion, cooling, and cutting.

[Example 2]

A polyamide (A) with a melting point of 283°C and a polyamide composition were obtained in the same manner as in Example 1, except that the diamine unit (X) was obtained from a mixture [5.6/0.4/94 (molar ratio)] of 2-ethyl-1,7-heptanediamine, 2-propyl-1,6-hexanediamine, and 2-methyl-1,8-octanediamine.

[Example 3]

A polyamide (A) with a melting point of 262°C and a polyamide composition were obtained in the same manner as in Example 1, except that the diamine unit (X) was obtained from a mixture [12/3/85 (molar ratio)] of 2-ethyl-1,7-heptanediamine, 2-propyl-1,6-hexanediamine, and 2-methyl-1,8-octanediamine.

[Example 4]

A polyamide (A) with a melting point of 258°C and a polyamide composition were obtained in the same manner as in Example 1, except that the diamine unit (X) was obtained from a mixture [16/4/80 (molar ratio)] of 2-ethyl-1,7-heptanediamine, 2-propyl-1,6-hexanediamine, and 2-methyl-1,8-octanediamine.

[Example 5]

A polyamide (A) with a melting point of 288°C and a polyamide composition were obtained in the same manner as in Example 1, except that the diamine unit (X) was obtained from a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Example 6]

A polyamide composition was obtained in the same manner as in Example 5, except that, as components fed from the upstream hopper of the twin screw extruder, glass fibers (2) were not used, aluminum phosphite ("APA-100" manufactured by TAIHEI CHEMICAL INDUSTRIAL CO., LTD.) was used as the flame-retardant aid (D), and a styrene-maleic anhydride copolymer (SMA) ("Xiran SZ23110" manufactured by Polyscope corporation) as a drip preventing agent such that a composition meeting proportions shown in Table 1 was achieved.

[Example 7]

A polyamide (A) and a polyamide composition were obtained in the same manner as in Example 1, except that the terminal amino group amount and the terminal carboxy group amount were adjusted to the contents shown in Table 1 by using, as the diamine unit (X), 5380 g of a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Example 8]

A polyamide (A) and a polyamide composition were obtained in the same manner as in Example 1, except that the terminal amino group amount and the terminal carboxy group amount were adjusted to the contents shown in Table 1 by using, as the diamine unit (X), 5540 g of a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Example 9]

A polyamide (A) with a melting point of 307°C and a polyamide composition were obtained in the same manner as in Example 1, except that the diamine unit (X) was obtained from a mixture [0.5/14.5/85 (molar ratio)] of 2-ethyl-1,7-heptanediamine, 2-methyl-1,8-octanediamine, and 1,9-nonanediamine.

[Comparative Example 1]

The polyamide (A) obtained in Example 5 was directly used for evaluation.

[Comparative Example 2]

A polyamide with a melting point of 285°C and a polyamide composition were obtained in the same manner as in Example 1, except that the diamine unit (X) included only 2-methyl-1,8-octanediamine units.

[Comparative Example 3]

A polyamide with a melting point of 306°C and a polyamide composition were obtained in the same manner as in Example 1, except that the diamine unit (X) was obtained from a mixture [15/85 (molar ratio)] of 2-ethyl-1,8-octanediamine and 1,9-nonanediamine.

[Example 10]

A polyamide (A) with a melting point of 283°C and a polyamide composition were obtained in the same manner as in Example 5, except that the dicarboxylic acid unit (Y) was obtained from 7027 g of 2,6-naphthalenedicarboxylic acid.

[Comparative Example 4]

A polyamide with a melting point of 294°C and a polyamide composition were obtained in the same manner as in Example 10, except that the diamine unit (X) was obtained from a mixture [15/85 (molar ratio)] of 2-methyl-1,8-octanediamine and 1,9-nonanediamine.

[Example 11]

A polyamide (A) with a melting point of 289°C and a polyamide composition were obtained in the same manner as in Example 1, except that the diamine unit (X) was obtained from a mixture [4/1/20/75 (molar ratio)] of 2-ethyl-1,7-heptanediamine, 2-propyl-1,6-hexanediamine, 2-methyl-1,8-octanediamine, and 1,10-decanediamine.

[Comparative Example 5]

A polyamide with a melting point of 301°C and a polyamide composition were obtained in the same manner as in Example 1, except that the diamine unit (X) was obtained from a mixture [20/80 (molar ratio)] of 2-methyl-1,8-octanediamine and 1,10-decanediamine.

Compositions of Examples and Comparative Examples and measurement results thereof are shown in Table 1.

Table 1

| | | | Unit | Ex.1 | Ex.2 | Ex.3 | Ex.4 | Ex.5 | Ex.6 |
|---|---|---|---|---|---|---|---|---|---|
| Diamine unit (X) | EHDA | | mol% | 4 | 5.6 | 12 | 16 | 4 | 4 |
| | PHDA | | mol% | 1 | 0.4 | 3 | 4 | 1 | 1 |
| | MODA | | mol% | 95 | 94 | 85 | 80 | 20 | 20 |
| | NMDA | | mol% | - | - | - | - | 75 | 75 |
| | DMDA | | mol% | - | - | - | - | - | - |
| | EHDA+PHDA | | mol% | 5 | 6 | 15 | 20 | 5 | 5 |
| Dicarboxylic acid unit (Y) | TA | | mol% | 100 | 100 | 100 | 100 | 100 | 100 |
| | NDCA | | mol% | - | - | - | - | - | - |
| Polyamide (A) or physical properties of polyamide | Inherent viscosity | | dl/g | 1.17 | 1.16 | 1.18 | 1.21 | 1.25 | 1.25 |
| | Melting point | | °C | 282 | 283 | 262 | 258 | 288 | 288 |
| | Crystallization temperature | | °C | 259 | 258 | 242 | 235 | 266 | 266 |
| | Glass transition temperature | | °C | 124 | 123 | 116 | 112 | 120 | 120 |
| | Crystallization rate | | 1/°C | 0.044 | 0.040 | 0.050 | 0.043 | 0.046 | 0.046 |
| | $[NH_2]$ | | μmol/g | 15 | 18 | 20 | 25 | 12 | 12 |
| | [COOH] | | μmol/g | 33 | 37 | 48 | 34 | 30 | 30 |
| | $[NH_2]$/[COOH] | | - | 0.5 | 0.5 | 0.4 | 0.7 | 0.4 | 0.4 |
| Polyamide composition | Polyamide (A) or polyamide | | Parts by mass | 45 | 45 | 45 | 45 | 45 | 50 |
| | Halogen-free flame-retardant (B) | | Parts by mass | 10 | 10 | 10 | 10 | 10 | 16 |
| | Filler (C) | Glass fiber (1) | Parts by mass | 30 | 30 | 30 | 30 | 30 | 30 |
| | | Glass fiber (2) | Parts by mass | 15 | 15 | 15 | 15 | 15 | - |
| | Flame-retardant aid (D) | | Parts by mass | - | - | - | - | - | |
| | Additive | Heat stabilizer (1) | Parts by mass | 0.1 | 0.1 | 0.1 | 0.1 | 0.1 | 0.1 |
| | | Heat stabilizer (2) | Parts by mass | 0.1 | 0.1 | 0.1 | 0.1 | 0.1 | 0.1 |
| | | Lubricant | Parts by mass | 0.3 | 0.3 | 0.3 | 0.3 | 0.3 | 0.3 |
| | | Nucleating agent | Parts by mass | 0.1 | 0.1 | 0.1 | 0.1 | 0.1 | 0.1 |
| | | Drip preventing agent | Parts by mass | - | - | - | - | - | 0.3 |

(continued)

| | | Unit | Ex.1 | Ex.2 | Ex.3 | Ex.4 | Ex.5 | Ex.6 |
|---|---|---|---|---|---|---|---|---|
| Physical properties of polyamide composition | Flexural strength | MPa | 220 | 220 | 221 | 223 | 209 | 190 |
| | Flexural modulus | GPa | 13.9 | 13.7 | 14.0 | 14.2 | 13.9 | 9.8 |
| | Color stability | - | A | A | A | A | A | A |
| | Heat aging resistance | - | A | A | A | A | A | A |
| | Hydrolysis resistance | - | A | A | A | A | B | B |
| | Moldability | - | A | A | A | A | A | A |
| | Flame resistance | - | V-0 | V-0 | V-0 | V-0 | V-0 | V-0 |
| | Blistering resistance | - | A | A | A | A | A | A |

"Ex." means "Example".

Table 1 (Continued)

| | | | Unit | Ex.7 | Ex.8 | Ex.9 | C.Ex.1 | C.Ex.2 | C.Ex.3 |
|---|---|---|---|---|---|---|---|---|---|
| Diamine unit (X) | EHDA | | mol% | 4 | 4 | 0.5 | 4 | - | - |
| | PHDA | | mol% | 1 | 1 | - | 1 | - | - |
| | MODA | | mol% | 20 | 20 | 14.5 | 20 | 100 | 15 |
| | NMDA | | mol% | 75 | 75 | 85 | 75 | - | 85 |
| | DMDA | | mol% | - | - | - | - | - | - |
| | EHDA+PHDA | | mol% | 5 | 5 | 0.5 | 5 | 0 | 0 |
| Dicarboxylic acid unit (Y) | TA | | mol% | 100 | 100 | 100 | 100 | 100 | 100 |
| | NDCA | | mol% | - | - | - | - | - | - |
| Polyamide (A) or physical properties of polyamide | Inherent viscosity | | dl/g | 1.25 | 1.25 | 1.26 | 1.25 | 1.32 | 1.34 |
| | Melting point | | °C | 288 | 288 | 307 | 288 | 285 | 306 |
| | Crystallization temperature | | °C | 266 | 266 | 280 | 266 | 256 | 277 |
| | Glass transition temperature | | °C | 120 | 120 | 123 | 120 | 125 | 123 |
| | Crystallization rate | | 1/°C | 0.046 | 0.046 | 0.037 | 0.046 | 0.034 | 0.035 |
| | $[NH_2]$ | | μmol/g | 70 | 150 | 10 | 12 | 18 | 10 |
| | [COOH] | | μmol/g | 20 | 3 | 25 | 30 | 38 | 24 |
| | $[NH_2]$/[COOH] | | - | 3.5 | 50 | 0.4 | 0.4 | 0.5 | 0.4 |
| Polyamide composition | Polyamide (A) or polyamide | | Parts by mass | 45 | 45 | 45 | 100 | 45 | 45 |
| | Halogen-free flame-retardant (B) | | Parts by mass | 10 | 10 | 10 | - | 10 | 10 |
| | Filler (C) | Glass fiber (1) | Parts by mass | 30 | 30 | 30 | - | 30 | 30 |
| | | Glass fiber (2) | Parts by mass | 15 | 15 | 15 | - | 15 | 15 |
| | Flame-retardant aid (D) | | Parts by mass | - | - | - | - | - | - |
| | Additive | Heat stabilizer (1) | Parts by mass | 0.1 | 0.1 | 0.1 | - | 0.1 | 0.1 |
| | | Heat stabilizer (2) | Parts by mass | 0.1 | 0.1 | 0.1 | - | 0.1 | 0.1 |
| | | Lubricant | Parts by mass | 0.3 | 0.3 | 0.3 | - | 0.3 | 0.3 |
| | | Nucleating agent | Parts by mass | 0.1 | 0.1 | 0.1 | - | 0.1 | 0.1 |
| | | Drip preventing agent | Parts by mass | - | - | - | - | - | - |

(continued)

| | | Unit | Ex.7 | Ex.8 | Ex.9 | C.Ex.1 | C.Ex.2 | C.Ex.3 |
|---|---|---|---|---|---|---|---|---|
| Physical properties of polyamide composition | Flexural strength | MPa | 210 | 208 | 217 | 115 | 202 | 221 |
| | Flexural modulus | GPa | 13.9 | 13.8 | 13.8 | 2.5 | 11.8 | 13.9 |
| | Color stability | - | B | B | A | A | A | A |
| | Heat aging resistance | - | B | B | A | A | A | A |
| | Hydrolysis resistance | - | A | A | B | C | C | C |
| | Moldability | - | A | A | B | B | C | C |
| | Flame resistance | - | V-0 | V-0 | V-0 | X | V-0 | V-0 |
| | Blistering resistance | - | A | A | A | C | C | A |
| "Ex." means "Example", and "C.Ex." means "Comparative Example". | | | | | | | | |

Table 1 (Continued)

| | | | Unit | Ex.10 | C.Ex.4 | Ex.11 | C.Ex.5 |
|---|---|---|---|---|---|---|---|
| Diamine unit (X) | EHDA | | mol% | 4 | - | 4 | - |
| | PHDA | | mol% | 1 | - | 1 | - |
| | MODA | | mol% | 20 | 15 | 20 | 20 |
| | NMDA | | mol% | 75 | 85 | - | - |
| | DMDA | | mol% | - | - | 75 | 80 |
| | EHDA+PHDA | | mol% | 5 | 0 | 5 | 0 |
| Dicarboxylic acid unit (Y) | TA | | mol% | - | - | 100 | 100 |
| | NDCA | | mol% | 100 | 100 | - | - |
| Polyamide (A) or physical properties of polyamide | Inherent viscosity | | dl/g | 1.22 | 1.23 | 1.23 | 1.21 |
| | Melting point | | °C | 283 | 294 | 289 | 301 |
| | Crystallization temperature | | °C | 246 | 249 | 267 | 275 |
| | Glass transition temperature | | °C | 135 | 136 | 121 | 123 |
| | Crystallization rate | | 1/°C | 0.027 | 0.022 | 0.045 | 0.039 |
| | $[NH_2]$ | | μmol/g | 28 | 22 | 12 | 8 |
| | [COOH] | | μmol/g | 40 | 35 | 38 | 30 |
| | $[NH_2]$/[COOH] | | - | 0.7 | 0.6 | 0.3 | 0.3 |
| Polyamide composition | Polyamide (A) or polyamide | | Parts by mass | 45 | 45 | 45 | 45 |
| | Halogen-free flame-retardant (B) | | Parts by mass | 10 | 10 | 10 | 10 |
| | Filler (C) | Glass fiber (1) | 30 | 30 | 30 | 30 | 30 |
| | | Glass fiber (2) | 15 | 15 | 15 | 15 | 15 |
| | Flame-retardant aid (D) | | Parts by mass | - | - | - | - |
| | Additive | Heat stabilizer (1) | 0.1 | 0.1 | 0.1 | 0.1 | 0.1 |
| | | Heat stabilizer (2) | 0.1 | 0.1 | 0.1 | 0.1 | 0.1 |
| | | Lubricant | 0.3 | 0.3 | 0.3 | 0.3 | 0.3 |
| | | Nucleating agent | 0.1 | 0.1 | 0.1 | 0.1 | 0.1 |
| | | Drip preventing agent | - | | | | |

(continued)

| | | Unit | Ex.10 | C.Ex.4 | Ex.11 | C.Ex.5 |
|---|---|---|---|---|---|---|
| Physical properties of polyamide composition | Flexural strength | MPa | 222 | 220 | 217 | 218 |
| | Flexural modulus | GPa | 14.1 | 14.0 | 13.8 | 13.8 |
| | Color stability | - | A | A | A | A |
| | Heat aging resistance | - | A | A | A | A |
| | Hydrolysis resistance | - | B | C | B | C |
| | Moldability | - | B | C | A | C |
| | Flame resistance | - | V-0 | V-0 | V-0 | V-0 |
| | Blistering resistance | - | A | A | A | A |
| "Ex." means "Example", and "C.Ex." means "Comparative Example". | | | | | | |

The abbreviations relating to the compounds used in Table 1 above and compound contents thereof are shown in Table 2 below. In Table 1, "(EHDA+PHDA)" represents the total of blending amounts (mol%) of EHDA and PHDA in the diamine unit (X).

Table 2

| Abbreviations | Compounds |
|---|---|
| EHDA | 2-Ethyl-1,7-heptanediamine |
| PHDA | 2-Propyl-1,6-hexanediamine |
| MODA | 2-Methyl-1,8-octanediamine |
| NMDA | 1,9-Nonanediamine |
| DMDA | 1,10-Decanediamine |
| TA | Terephthalic acid |
| NDCA | 2,6-Naphthalenedicarboxylic acid |

Comparisons between Examples 1 to 9 and Comparative Examples 2 and 3, between Example 10 and Comparative Example 4, and between Example 11 and Comparative Example 5 from Table 1 reveal that the crystallization rate is high and the cooling time during injection molding is short in Examples. That is, it is found that when polyamides including the same dicarboxylic acid unit (Y) include, as the diamine unit (X1), 2-ethyl-1,7-heptanediamine and 2-propyl-1,6-hexanediamine, the crystallization rate is high and productivity is excellent. In addition, it is found that, in comparison with Comparative Examples 2 to 5 including, as the branched aliphatic diamine, only 2-methyl-1,8-octanediamine in which the branched structure thereof is a methyl group, decreases in melting point and glass transition temperature are small and heat resistance is excellent in Examples, even when 2-ethyl-1,7-heptanediamine and 2-propyl-1,6-hexanediamine are included .

Accordingly, as the polyamide compositions of Examples include the polyamide (A), the polyamide compositions of Examples have excellent moldability and hydrolysis resistance, while maintaining excellent physical properties of the polyamide (A). In addition, as the polyamide compositions of Examples include the halogen-free flame-retardant (B), the polyamide compositions of Examples exhibit high flame resistance and are also excellent in blistering resistance.

Industrial Applicability

As described above, the polyamide composition of the present invention has excellent flame resistance, moldability, and hydrolysis resistance, while maintaining excellent physical properties of the polyamide (A). Accordingly, the polyamide composition of the present invention can be used as various molded bodies required to have heat resistance, flame resistance, and hydrolysis resistance and can improve productivity when molded bodies are produced, and thus is remarkably useful.

Note that the present application is based on Japanese Patent Application (JP2021-206197) filed on December 20, 2021, which is incorporated by reference in its entirety.

## Claims

1. A polyamide composition comprising a polyamide (A) and a halogen-free flame-retardant (B), wherein

   the polyamide (A) comprises a diamine unit (X) and a dicarboxylic acid unit (Y),
   the diamine unit (X) comprises 0.1 mol% or more and less than 36 mol% of a diamine unit (X1),
   the diamine unit (X1) is a constituent unit derived from an aliphatic diamine, and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

2. The polyamide composition according to claim 1, wherein
   the diamine unit (X1) comprises a constituent unit derived from an aliphatic diamine having 9 carbon atoms.

3. The polyamide composition according to claim 1 or 2, wherein
   the diamine unit (X1) comprises a constituent unit derived from at least one diamine selected from the group consisting of 2-ethyl-1,7-heptanediamine and 2-propyl-1,6-hexanediamine.

4. The polyamide composition according to any one of claims 1 to 3, wherein
   the diamine unit (X) comprises 1 to 20 mol% of the diamine unit (X1).

5. The polyamide composition according to any one of claims 1 to 4, wherein
   the diamine unit (X) further comprises a diamine unit (X2), the diamine unit (X2) is a diamine unit other than the diamine unit (X1), and the diamine unit (X2) is a constituent unit derived from at least one diamine selected from the group consisting of a linear aliphatic diamine, a branched aliphatic diamine other than the aliphatic diamine constituting the diamine unit (X1), an alicyclic diamine, and an aromatic diamine.

6. The polyamide composition according to claim 5, wherein
   the diamine unit (X2) is a constituent unit derived from at least one diamine selected from the group consisting of a linear aliphatic diamine and a branched aliphatic diamine having a methyl group as a branched chain.

7. The polyamide composition according to claim 5 or 6, wherein
   the diamine unit (X2) is a constituent unit derived from a diamine having 6 to 10 carbon atoms.

8. The polyamide composition according to any one of claims 5 to 7, wherein
   the diamine unit (X2) is a constituent unit derived from at least one diamine selected from the group consisting of 1,6-hexanediamine, 1,9-nonanediamine, 1,10-decanediamine, 2-methyl-1,5-pentanediamine, and 2-methyl-1,8-octanediamine.

9. The polyamide composition according to any one of claims 1 to 8, wherein
   the dicarboxylic acid unit (Y) comprises a constituent unit derived from at least one dicarboxylic acid selected from the group consisting of an aliphatic dicarboxylic acid, an aromatic dicarboxylic acid, and an alicyclic dicarboxylic acid.

10. The polyamide composition according to any one of claims 1 to 9,
    wherein the dicarboxylic acid unit (Y) comprises a constituent unit derived from at least one dicarboxylic acid selected from the group consisting of terephthalic acid, cyclohexane dicarboxylic acid, and naphthalene dicarboxylic acid.

11. The polyamide composition according to any one of claims 1 to 10, wherein
    the halogen-free flame-retardant (B) is at least one selected from the group consisting of a monophosphinate represented by General Formula (1) below and a diphosphinate represented by General Formula (2) below:

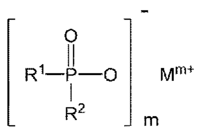

(1)

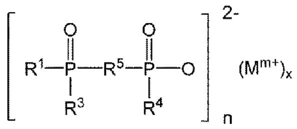 (2)

[In General Formula (1) and General Formula (2) above, $R^1$, $R^2$, $R^3$, and $R^4$ each independently represent an alkyl group having 1 to 6 carbon atoms, an aryl group having 6 to 12 carbon atoms, or an arylalkyl group having 7 to 20 carbon atoms. $R^5$ represents an alkylene group having 1 to 10 carbon atoms, an arylene group having 6 to 10 carbon atoms, an alkylarylene group having 7 to 20 carbon atoms, or an arylalkylene group having 7 to 20 carbon atoms. M represents calcium (ion), magnesium (ion), aluminum (ion), or zinc (ion), m is 2 or 3, n is 1 or 3, and x is 1 or 2.]

**12.** The polyamide composition according to any one of claims 1 to 11, further comprising a filler (C).

**13.** The polyamide composition according to claim 12, comprising 0.1 parts by mass or more and 200 pars by mass or less of the filler (C) based on 100 parts by mass of the polyamide (A).

**14.** A molded article composed of the polyamide composition according to any one of claims 1 to 13.

**15.** The molded article according to claim 14, which is an electric part or an electronic part.

**16.** The molded article according to claim 14 or 15, which is a surface mounting part.

**INTERNATIONAL SEARCH REPORT**

International application No.
**PCT/JP2022/046620**

**A. CLASSIFICATION OF SUBJECT MATTER**

***C08L 77/06***(2006.01)i; ***C08G 69/26***(2006.01)i; ***C08K 3/013***(2018.01)i; ***C08K 5/5313***(2006.01)i
FI: C08L77/06; C08G69/26; C08K3/013; C08K5/5313

According to International Patent Classification (IPC) or to both national classification and IPC

**B. FIELDS SEARCHED**

Minimum documentation searched (classification system followed by classification symbols)

C08L77/06; C08G69/26; C08K3/013; C08K5/5313

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 52-41692 A (DYNAMIT NOBEL AG) 31 March 1977 (1977-03-31)<br>claims, p. 3, upper right column, lines 1-10, p. 3, lower left column, lines 5-8, p. 3, lower right column, lines 11-17, example 2 | 1, 4-16<br>2-3 |
| Y<br>A | JP 3-140327 A (HUELS AG) 14 June 1991 (1991-06-14)<br>claims, p. 3, lower left column, lines 13-20, lower right column, line 13 to p. 4, upper left column, line 17, example 1 | 1, 4-7, 9-16<br>2-3, 8 |
| Y<br>A | WO 93/00386 A1 (E. I. DU PONT DE NEMOURS AND CO.) 07 January 1993 (1993-01-07)<br>claims, p. 5, lines 4-11, p. 6, lines 1-36, table I (a), example 1 | 1, 4-9, 11-16<br>2-3, 10 |
| Y | WO 2020/040282 A1 (KURARAY CO., LTD.) 27 February 2020 (2020-02-27)<br>claims, paragraphs [0135]-[0146] | 1, 4-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 January 2023** | **14 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/046620**

**C. DOCUMENTS CONSIDERED TO BE RELEVANT**

| Category* | Citation of document, with indication, where appropriate, of the relevant passages | Relevant to claim No. |
|---|---|---|
| A | WO 2021/037850 A1 (SOLVAY SPECIALTY POLYMERS USA, LLC) 04 March 2021 (2021-03-04)<br>entire text | 1-16 |
| P, A | WO 2022/091987 A1 (KURARAY CO., LTD.) 05 May 2022 (2022-05-05)<br>claims, paragraphs [0046]-[0054], examples | 1-16 |

Form PCT/ISA/210 (second sheet) (January 2015)

**INTERNATIONAL SEARCH REPORT**
**Information on patent family members**

International application No.
**PCT/JP2022/046620**

| Patent document cited in search report | Publication date (day/month/year) | Patent family member(s) | Publication date (day/month/year) |
|---|---|---|---|
| JP 52-41692 A | 31 March 1977 | US 4111921 A<br>claims, p. 2, column 3, lines 58-68, p. 2, column 4, lines 21-24, p. 2, column 44, lines 55-63, example 2<br>GB 1557272 A<br>DE 2542938 A1 | |
| JP 3-140327 A | 14 June 1991 | US 5300557 A<br>claims, p. 1, column 2, line 62 to p. 2, column 3, line 7, p. 2, column 3, lines 41-66, example 1<br>EP 423472 A2<br>CA 2027965 A1 | |
| WO 93/00386 A1 | 07 January 1993 | US 5110900 A<br>EP 593577 A1 | |
| WO 2020/040282 A1 | 27 February 2020 | US 2021/0179778 A1<br>claims, paragraphs [0228]-[0244]<br>EP 3842471 A1<br>CN 112601776 A<br>KR 10-2021-0048486 A | |
| WO 2021/037850 A1 | 04 March 2021 | JP 2022-546060 A<br>US 2022/0289909 A1<br>EP 4021959 A1<br>CN 114302906 A<br>KR 10-2022-0055474 A | |
| WO 2022/091987 A1 | 05 May 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011080055 A
- JP 2017517594 A
- JP H07228690 A
- EP 699708 A
- JP H0873720 B
- JP 2021206197 A